(19) Europäisches Patentamt / European Patent Office / Office européen des brevets

(11) **EP 1 870 795 A2**

(12) **EUROPEAN PATENT APPLICATION**

(43) Date of publication:
26.12.2007 Bulletin 2007/52

(51) Int Cl.:
*G06F 1/26* (2006.01)

(21) Application number: 06012653.9

(22) Date of filing: 20.06.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Forcar Co., Ltd.**
**Pai-tou**
**T'ai pei (TW)**

(72) Inventor: **Wu, Chiou Yih, c/o Forcar Co., Ltd.**
**Pai-tou, Taipei (TW)**

(74) Representative: **Epping - Hermann - Fischer**
**Patentanwaltsgesellschaft mbH**
**Ridlerstrasse 55**
**80339 München (DE)**

(54) **Power source connecting circuit device with current transformer**

(57) A current-transformed power source connecting circuit device comprises a power source plug-in, in connection with an external power source; a current transformer, having a primary and a secondary windings, the primary winding of which is connected in series to a current path of the power source plug-in for detection of a current; a main socket, capable of connecting externally to a main electrical apparatus, one end of which is connected to the current transformer; a rectifying means, in connection-with the secondary winding of the current transformer, for rectification of a current from the current transformer; a switching means, for receiving a voltage from the rectifying means, which is switched on at a time that the received voltage is sufficient and switched off at a time that the voltage is insufficient; and at least one subsidiary socket, for connecting with the switching means and parallel-connection with the main socket, capable of connecting to a peripheral electrical apparatus.

**FIG. 1**

**Description**

Background

Field of the Invention

The invention generally relates to a power source connecting device having current transformer and, particularly, to a power line connecting device having automatic on/off linked function and externally connected sockets.

Related Art

Recently, following the increasing exhaust of conventional energy and the raising consciousness of environmental protection, the mining for high pollution coal and oil has been continuously obstructed. Therefore, development of new energy is an urgent need for all countries and international organization. However, there still exists a lot of technical difficulties for development and commercialization of new energy at present such that the substitutable energy still has to be awaited. In addition, following the increase of population and rapid development of industrialization, especially for the coming of computer science, power consumption of the electronic products and consumer goods will cause the supply of energy to be a serious problem.

As concerning the power consumption of the electronic products and consumer goods, particularly for the modern indispensable personal computer, how to save the power is obviously one of the improvement for the energy supply.

The personal computer always need to work together with other peripherals, such as printer, scanner, modem, screen, ...., etc., to achieve a specified requirement. Therefore, the total power consumption of the computer main unit (approximately 150 W) with the operation of other peripherals will be raised. Particularly, after shut-off of the computer main unit, all of other peripheral apparatuses are still connected to a power source connecting device, for example an extension line, and not to be used. The power might be wasted since these apparatuses are not used and are at stand-by mode or still at power-on mode.

At present, the power source connecting device, as in the form of a power saving extension line is based on the switching type. However, it has high power consumption problem and can be affected by EMI noise. Therefore, if there is needed to improve its power consumption, the switching type of the conventional power source connecting device should be added other parts. As a result, the cost and heat dissipation might be another problem, and the possibility of failure-and hazard caused by heat dissipation can be increased accordingly.

Additionally, as the design of the conventional power source connecting device, the sockets are always lined up on a surface of the connecting device for receiving the plug-in. Moreover, for size reduction, the modern electronic product might not have adapter built in the main body of the electronic product. Therefore, several of adapters being put into the conventional extension line crowdedly might cause loose or poor contact problem resulting in inconvenience and hazard phenomena happened in use.

Summary of the Invention

In terms of the above described disadvantage of the conventional power source connecting device, especially for the problem of continuous power consumption in the stand-by condition of an electrical apparatus, the inventor has developed a novel power-source connecting device, which takes measures of the current transformation for controlling the electrical apparatus. As a result, the stand-by condition can be eliminated and the problem of continuous power consumption can also be solved. This is main object of the invention.

For achieving the above object, in accordance with one aspect of the invention, current-transformed power source connecting circuit device is provided, comprising: a power source input terminal, in connection with an external power source; a current transformer, including a primary and a secondary windings, the primary winding of which is connected to a circuit in between a main output terminal and the power source input terminal in series, wherein one end of the main output terminal is connected to the current transformer and the other end of that is externally connected to a main load; a rectifying means, in connection with the secondary winding of the current transformer, for rectification of a current from the current transformer; a switching means, for receiving a voltage from the rectifying means, which is switched on at a time that the received voltage is held at a preset value and switched off at a time that the voltage is lower than the preset value; and at least one subsidiary out terminal, in connection with the switching means and in parallel-connection with the main output terminal, for connecting to other external loads.

Further, according to the above aspect, the current-transformed power source connecting circuit device additionally includes at least one current-limiting circuit breaker means which is connected in between the power source input terminal and the current transformer for automatically cutting off a passing current which is too large in excess of a preset value, wherein the current-limiting circuit breaker means can be recovered to an on state by using a manual or an automatic manner.

Furthermore, the current transformer additionally includes a regulating switch for regulating a magnitude of current of the secondary winding.

Further, according to another aspect of the invention, a power source extension line is provided, which comprises: a power source input plug-in, capable of connecting to an external power source; an electricity distribution panel, including a housing and a wiring board which is installed in the housing; and a plurality of externally connected sockets, for distributing electricity from the power source input plug-in to loads to be connected through the distribution panel, wherein the plurality of externally connected sockets are flexible connecting lines, one end of each line is connected to the electricity distribution panel and the other end is extended to external of the housing. Since the sockets of the power source extension line of the invention are not made on the external surface of the housing of the electricity distribution panel as the same as those of the conventional extension line. Therefore, the crowded problem and interference problem among the transformers, which would cause these sockets not to be plugged well, can be avoided.

Furthermore, in accordance with still another aspect of the invention, a current-transformed power source extension line device is provided, comprising: a power source input plug-in, capable of connecting to an external power source; a current transformer, including a primary and a secondary winding, the primary winding of which is connected to a circuit in between a main output terminal and the power source plug-in, wherein one end of the main output terminal is connected to the current transformer, and the main output terminal can be connected externally to a high power load; a rectifying means, in connection with the current transformer, for rectification of a current from the current transformer; a switching means, for receiving a voltage from the rectifying means, which is switched on at a time that the received voltage is held at a preset value and switched off at a time that the voltage is lower than the preset value; and a plurality of subsidiary output terminals, for connecting with the sockets respectively and connecting to the switching means, and in parallel-connection with the main output terminal, which is capable of connecting to other loads externally.

Brief Description of Drawings

Fig. 1 is a circuit diagram, showing the power source connecting circuit device according to the invention;

Fig. 2 is a perspective view, showing an extension line which is made according to the power source connecting circuit device of the invention; and

Fig. 3 is an exploded view of Fig. 2.

Detailed Description of the Invention

For fully understanding of the above object and efficiency of the invention, the preferred embodiments of the invention will be described below in conjunction with the drawings.

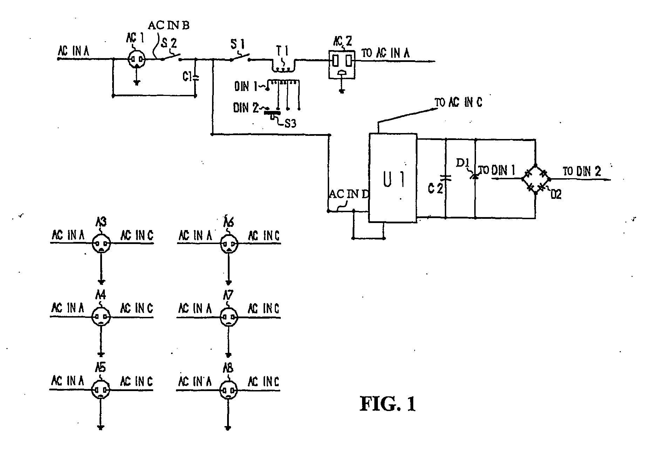

Firstly, as shown in Fig. 1, the current-transformed power source connecting device includes: a current transformer T1 which has a primary winding and a secondary winding, one end of the primary winding is connected with a main load socket AC 2; a current-limiting circuit breaker S1, one end of which is connected to the other end of the primary winding for receiving a passing current, and which can be automatically broken when the passing current is larger than a preset current and can also be automatically recovered after the passing current is recovered back to be equivalent to or lower than the preset current; a current-limiting circuit breaker S2, one end of which is connected to the other end of the circuit breaker S1 and the other end of which is connected to a power source socket AC 1 for bearing a current that is larger than the preset current of the circuit breaker S1, the circuit breaker S2 will be automatically broken as soon as the current is in excess of the preset current and however shall be recovered by manual operation; a current value selector S3, for selection o-f the wounded coil turns of the secondary winding of the current transformer T1 in order to regulate the magnitude of an induced current; a bridge rectifier D2, which connects with a rectifying capacitor C2 and a Zener diode (voltage- limiting diode) D1 in parallel and which is in connection with contacts DIN 1, DIN 2 of the secondary winding of the current transformer T1, for stably controlling a voltage that is converted from AC to DC voltage and is rectified; a relay U1, which is internally connected to the bridge rectifier D2 and is driven by the DC voltage of the bridge rectifier D2 in order to generate a function of switching, that is to say, the relay U1 is cut off at a time that the DC voltage of the bridge rectifier D2 is insufficient; a surge absorber Cl, for preventing a surge from the external power source; and a plurality of externally connected parallel sockets, for connecting to a plurality of electric apparatuses A3 to A8, etc., one end of each of the socket is connected with the other end AC IN A of the power source AC 1 and the other end of which is connected with the terminal AC IN C of the relay U1 (to be described later).

One end AC IN C of the relay U1 is connected with the other ends of sockets A3 to A8, and the other end AC IN D of that is connected to the relays S1, S2 in common.

In such an embodiment, it is emphasized that the control action is carried out by the magnitude of the current flowing through the primary winding of the current transformer T1, that is not controlled-by the voltage of transformer as the prior art. In the invention, there are designed two current-limiting circuit breakers S1, S2 for performing the protection. As an application designed according to such an embodiment, current of the main socket AC 2 is set lower than the limit of 2 amperes which is preset for the relay S1 in order to keep an electrical apparatus working normally. When the current of this main socket is larger than the preset limit of 2 amperes for the circuit breaker S1, or even larger than the preset limit of 10 amperes for the circuit breaker S2, for example, the circuit breakers S1 or S2 will be automatically shut off, so as to prevent the electrical apparatus from burning out.

Additionally, for better understanding of the invention, the following will explain the basic function of conventional current transformer which is used in the invention. The typical current transformer is generally connected in series within the circuit loop, in that copper wires of the primary winding are thicker than those of the secondary winding and the turns of wounded coils of the primary winding is less than that of the secondary winding a large number of times. The principal function of the current transformer is to convert an input large current into a small current. Thus, by means of the feature of current transformer and a current value setting switch S3, it is possible to set up the switch S3 for the current transformer flexibly according to the operating status. For example, if there is a 3-steps setting function in the switch S3, it is possible to set up the switch S3 on the first step when the required current is large and to set up on the third step when is small. In this way, it is possible to achieve a regulating manner for power saving.

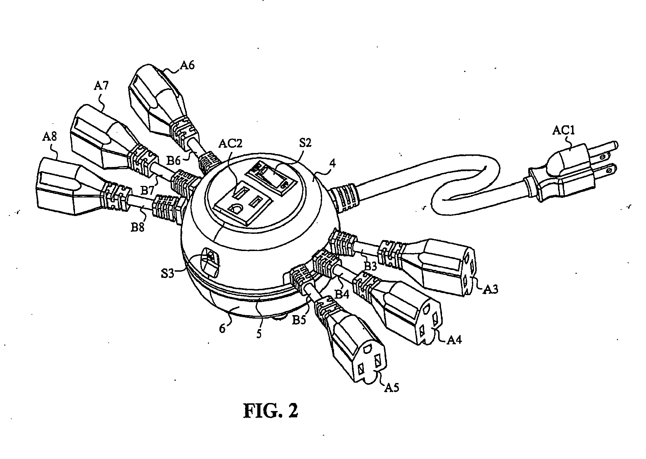

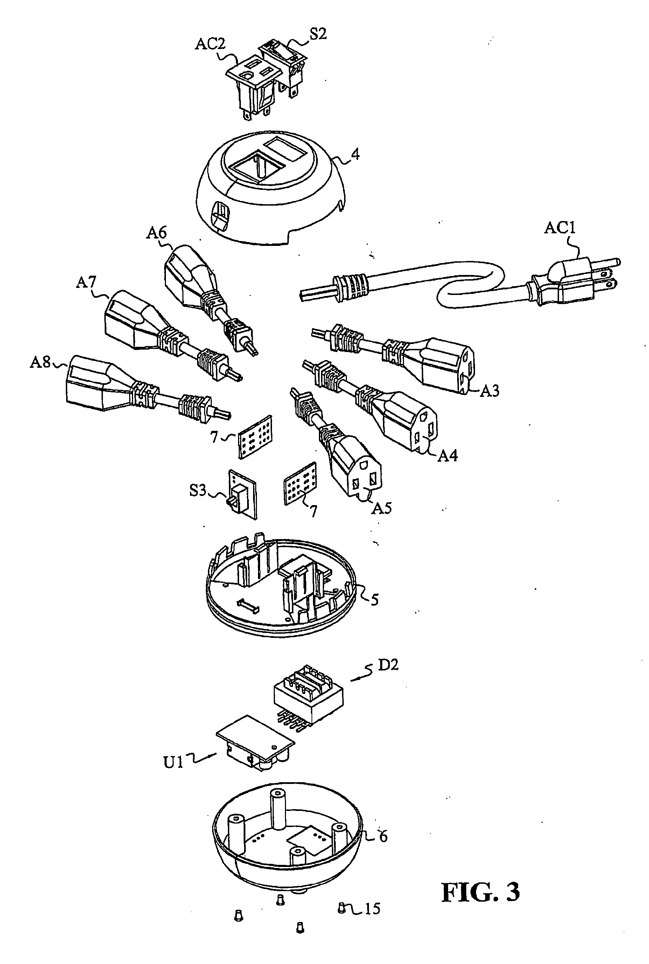

Fig. 2 is a 3D perspective view showing a real product appearance of an extension line according to a power line connecting circuit device of the invention, in that the reference numerals of constituents correspond to those defined in the circuit diagram of Fig. 1 and have the same function. Fig. 3 is an exploded view for Fig. 2, showing an extension line in that each component of Fig. 2 is assembled in a housing to become a type of the extension line. The main object of Fig. 3 is to show a relationship of the spatial position between these sockets A3 to A8 and the housing in assembly. As to other circuit components in Fig. 2, in fact, these components is collectively arranged behind a wiring board 7 and fixed on a central board. Since this belongs to an optional design, therefore, the description of the physical arrangement is omitted. The housing includes an upper cover 4 and a lower cover 6 which are connected in together by using fixing member, such as screws 15 for forming an internal space in order to accommodate the power line connecting device of the invention. On the upper cover 4, there are installed a switch S2, a socket AC 2, and a selector S3 which is provided on the peripheral of the upper cover 4, the positions of which are not necessary to be specified on-the upper cover 4 and can be arranged in convenience. As for these parallel-connected sockets A3 to A8, are extended to external of housing via conduction lines B3 to B8, from the upper housing 4 or lower housing 6, that is, from the upper housing 4 or lower housing 6 in parts, or from the position of the central board 5 to a distance. Since the position among these sockets A3 to A8 can be flexibly varied to be adaptive for different size of the external electrical apparatuses, therefore, the disadvantage of interference among these sockets can be eliminated. That is, the concept of the invention is fully different from that of the conventional sockets which are fixed on the surface of the housing directly. For example, due to the mass production, the power supply is often independently arranged and utilizes the adapter for substitution. By using the conventional extension line, it is possible to cause inconvenience for these adapters to be plugged in. Therefore, the inconvenience and hazard caused by the conventional extension line can be reduced by utilization of the invention. Additionally, the invention employs external-lead- connection socket such that the actual application of the invention can be preferably matched to the adaption as well as is well-to-do in space, because the invention uses the external leads as a buffer.

When it plans to use the invention for apparatus such as computer and its peripherals, firstly, the plug-in AC 1 is plugged in a socket which can supplies a power source, and the exposed switch S2 can be switched-on by manual manner.--When a main computer (not shown) which is connected to the socket AC 2 is turned on, the current coming from the power source flows through a surge absorber C1 which is to prevent hazard from the surge and through the protection switch S1 to the current transformer T1. In one embodiment, the current value setting switch S3 can be set up on first step, for example, in order to match to a power consumption of one computer. Here, two contact DIN 1, DIN 2 of the secondary winding of the current transformer are connected to a bridge rectifier D2, respectively, and AC voltage coming from the socket AC 1 can be rectified by using the bridge rectifier and converted to DC voltage, for example 12V, by using a Zener diode D1 and a rectifying capacitor C2, so as to keep the operation of the relay U1.

Through the operation of the relay U1, the terminal AC IN B is conducted with the AC IN C, thus the plurality of parallel sockets AC 3 to AC 8 can be conductive for supplying the electricity to each of electrical apparatus which is connected to the corresponding socket AC 3 to AC 8.

Contrarily, when the main computer is turned off, the current flowing into the primary winding of the current transformer T1 will become small and the voltage induced in the secondary winding of the current transformer T1 will become lower than the operating voltage of the relay U1. Therefore, the relay will be opened and thus the terminal AC IN C of relay U1 has no electricity. Accordingly, each of the sockets A3 to A8 has no electricity, too. Thus, the electrical apparatuses connected with these sockets A3 to A8 will not consume the power, so that the invention can achieve the object and efficiency of power-saving.

Preferred Embodiment

The extension line of Fig. 2 was manufactured based on concret design data and estimated the degree of power saving, in order to develop the worth of the invention in industry.

(A) Main computer is turned on:
Working current AC = 1A, operating voltage of relay U1 = 12V, and load = 400Ω,
Primary winding: secondary winding (of current transformer T1) = 45Ts:1500Ts = 3:100,
Current of secondary winding: 1A × 3/100 = 30mA.
After rectification, current is 30mA, voltage across the load of relay U1 = 30mA x 400Ω = 12V, then the relay U1 starts.
Power consumption of relay U1: 30mA x 12V = 0.36W.
(B) Main computer is turned off:
Working current AC = 0.2A, operating voltage of relay U1 = 12V, and load = 400Ω,
Current of secondary winding of T1: 0.2A x 3/100 = 6mA.
After rectification, current is 6mA, voltage across the relay U1 = 6mA x 400Ω = 2.4V, then the relay U1 opens since the voltage is insufficient.
Here, power consumption of relay U1: 6mA x 2.4V = 0.014W.

Next, an actual application example will be described based on the above:
Under the condition of 110V of the power source, power consumption for a table top computer, when it is turned on: 150W, and when it is turned off or in stand-by: 5 to 10W.
(A1) When the computer is turned on, the current on the loop will be 150W/110V = 1.36A. The switch S1 will secure the safety at first. After the current flows into the primary winding of T1, the current induced in the secondary winding of T1 will be 40.9mA under the ratio of primary winding: secondary winding = 45Ts: 1500Ts. After rectification, the voltage across the load 400Ω of relay U1 will be 40.9mA x 400Ω = 16.36V. Since it is protected by a 12V of Zener diode D1, the relay U1 starts and supplies the power to the peripheral apparatus.
(P1) Power consumption of relay U1 at power-on:

$$40.9mA \ x \ 16.36V \ = \ 0.67W.$$

(B1) By using the invention, when the computer is turned off or in stand-by, the current on the loop will be 10W/110V = 90.9mA. The current induced in the secondary winding of T1 will be 2.7mA under the ratio of windings in T1 = 45Ts:1500Ts. The voltage across the load 400Ω of relay U1 will be 2.7mA x 400Ω = 1.08V. Then, the relay U1 opens because the operating voltage of U1 is decreased at the power-off. The electricity of sockets AC 3 to AC 8 for peripheral apparatus are cut-off as well.
(P2) Power consumption of relay U1 at power-off:

$$2.7mA \ x \ 1.08V \ = \ 0.003W.$$

(P3) Power consumption of general peripheral apparatus at stand-by:

| | |
|---|---|
| LCD display (Monitor) | : 5.1 w/hr. |
| Scanner | : 0.3 w/hr. |
| Printer | : 6.9 w/hr. |
| Speaker | : 16.2 w/hr. |
| ADSL Box | : 5.1 w/hr. |
| Total | : 33.6 w/hr. |

(Data source: Energy Bureau of Ministry of Economic Affairs) .
(Office time: 8:00 am. to 17:00 pm., 5 days/wk)

(P4) Within a week, when the computer is powered on at the office time, the device of the invention will consume the electricity power = P1 x 9(hrs.) x 5(days) = 0.67w x 45(hrs.) = 30.15w.

(P5) Within a week, when the computer is powered off at the office leaving time, the device of the invention will consume the electricity power = P2 x (15 (hrs.) x 5(days) + 24(hrs.) x 2 (days) ) = 0.003W x 123(hrs.) = 0.37 W.

(P6) Within a week, after using the device of the invention, the peripherals can save the power at the office leaving time = P3 x (15(hrs.) x 5(days) + 24(hrs.) x 2(days)) = 33.6W x 123(hrs.) = 4132.8W.

(P7) Within a week, the total saved power at the office time/office leaving time will be: P6-P4-P5 = 4132.8W-30.15W-0.37W = 4102.3W

Therefore, the power saved for a year will be: 4102.3W x 52(weeks) = 213319.6W. This power is simply saved by only a computer system. If there are 10 sets or even more than 10 sets of the computer systems, the invention will provide energy saving and cost efficiency.

Most of the extension line available on the market employ switching mode, which is different from the current-transformed mode of the invention. The comparison table is listed as following:

|  | Switching mode | Current-transformed mode |
|---|---|---|
| Power-on | 4 W (ref. value) | 0.67 W |
| Power-off | 2 W (ref. value) | 0.003 W |
| EMI Noise | yes | No |
| Cost | High (more parts) | Low (less parts) |
| Temperature | High | Low |

Though the preferred embodiments of the invention has been described, however, these embodiments are illustrative and not limiting of the invention. For example, in termed of A/V apparatus, such as A/V Hi-Fi TV set, there are DVD video recorder/player, Hi-Fi amplifier, TV game, ..., etc. as the peripherals of the TV. The current- transformed power source extension line can bring into excellent efficacy for power-saving.

Additionally, except for the above current-transformed power source extension line of the invention, the portion of current transformer related circuit can be taken out, which leaves the remaining portions for simple extension line use. Though it might have no efficacy for power-saving, however, it would have relatively large convenience in the spatial arrangement. The invention has been described in accordance with the above preferred embodiment, however, it can be recognized by a person who is skillful in the art that modification and variation can be made without departing from the scope and spirit of the appended claims.

**Claims**

1. A current-transformed power source connecting circuit device, comprising:

   - a power source input terminal, in connection with an external power source;
   - a current transformer, including a primary and a secondary windings, the primary winding being connected to a circuit in between a main output terminal and the power source input terminal in series, wherein the main output terminal is connected to a main load externally;
   - a rectifying means, in connection with the secondary winding of the current transformer, for rectification of a current from the current transformer;
   - a switching means, for receiving a voltage from the rectifying means, the switching means being switched on and switched off by the voltage from the rectifying means; and
   - at least one subsidiary out terminal, in connection with the switching means and in parallel-connection with the main output terminal, for connecting to external loads and for controlling an on/off of an input current coming from the power source input terminal by using the on/off of the switching means.

2. The current-transformed power source connecting circuit device according to Claim 1, further comprising at least one current-limiting circuit breaker means, connected in between the power source input terminal and the current transformer, for automatically cutting off a current which is in excess of a preset value from the power source input terminal, wherein the current limiting circuit breaker means can be recovered to an on state by using manual or automatic manner.

3. The current-transformed power source connecting circuit device, according to claim 1, wherein the current transformer further includes a regulating switch for regulating a magnitude of current of the secondary winding.

4. The current-transformed power source connecting circuit device according to Claim 1, further comprising a surge absorbing means, connected to behind the power source input terminal.

5. The current-transformed power source connecting circuit device according to Claim 1, wherein the subsidiary out terminals are connected with each other in parallel.

6. A power source extension line device, for connecting to a power source, comprising:

   - a housing, for accommodating a wiring board in which a circuit device is installed;
   - a power source input plug-in, capable of connecting to an external power source, for inputting an electricity from the external power source to the circuit device in the housing; and
   - a plurality of sockets, connected with each other in parallel, for distributing the inputted electricity from the external power source to loads to be connected externally,
   - wherein at least one socket section is connected to the wiring board by means of a connecting wire, and is extended to external of the housing.

7. The power source extension line device according to Claim 6, wherein the connecting wire is flexible.

8. A current-transformed power source extension line circuit device, comprising:

   - a housing, for accommodating an extension line circuit device;
   - a power source input plug-in, capable of connecting to an external power source and extending to external of the housing;
   - a current transformer, including a primary and a secondary windings, the primary winding being connected to a circuit in between a main output terminal and the power source input plug-in, wherein one end of the main output terminal is connected to the current transformer and the other end of that is connected to a main load externally;
   - a rectifying means, in connection with the secondary winding of the current transformer, for rectification of a current from the current transformer;
   - a relay switching means, for receiving a voltage from the rectifying means, the relay switching means being switched on and switched off by the voltage of the rectifying means; and
   - a plurality of subsidiary output terminals, in connection with each other in parallel and with the relay switching means, and in parallel connection with the main output terminal, for controlling an on/off of an input current coming from the external power source by using the on/off of the relay switching means, each of which can be connected externally to other loads, wherein at least one of the subsidiary output terminal is the socket section of the power source extension line device in accordance with Claim 6 and is extended to external of the housing.

9. The current-transformed power source extension line circuit device, according to Claim 8, further comprising a current-limiting circuit breaker means, connected in between the power source input plug-in and the current transformer, for automatically cutting off a current which is in excess of a preset value from the external power source, wherein the current-limiting circuit breaker means can be recovered to an on state by using manual or automatic manner.

10. The current-transformed power source extension line circuit device according to Claim 8, wherein the current transformer further includes a regulating switch for regulating a magnitude of current of the secondary winding.

11. The current-transformed power source extension line circuit device according to Claim 8, further comprising a surge absorbing means, connected to behind the power source input plug-in.

FIG. 1

**FIG. 2**

AC2    S2

4

A6

A7    AC1

A8

7

S3

7    A3

A4

A5

5

D2

U1

6

15

**FIG. 3**